# EUROPEAN PATENT SPECIFICATION

(11) **EP 0 672 092 B1**
(45) Date of publication and mention of the grant of the patent: **04.02.1998**
(21) Application number: 94902370.9
(22) Date of filing: 19.11.1993
(51) Int. Cl.: C09J 7/02, C08J 7/04

(54) **HEAT TRANSFERABLE FLUORINATED RESIN FILM**
Wärmeübertragbarer, fluorierter Harzfilm
PELLICULE EN RESINE FLUORUREE A TRANSFERT THERMIQUE

(30) Priority: 01.12.1992 JP 321528/92
(43) Date of publication of application: 20.09.1995
(73) Proprietor: MINNESOTA MINING AND MANUFACTURING COMPANY, St. Paul, Minnesota 55133-3427 (US)
(72) Inventor: KATOH, Naohiro, Saint Paul, MN 55133-3427 (US)
(74) Representative: VOSSIUS & PARTNER
(86) International application number: US9311411
(87) International publication number: WO9412583

(56) References cited:
- EP-A- 0 060 421
- EP-A- 0 459 720
- FR-A- 2 418 810
- US-A- 5 132 164
- DATABASE WPI Week 9115, Derwent Publications Ltd., London, GB; AN 106924 'DECORATIVE BAND CONTAINING VINYL- OR VINYLIDENE-FLUORIDE RESIN FILM' & JP,A,3 049 951 (TOKYO TOKUSHU PRINT) 4 March 1991
- DATABASE WPI Week 9011, Derwent Publications Ltd., London, GB; AN 078627 'FLUORO-RESIN MULTI-PLY FILM' & JP,A,2 030 528 (DENKI KAGAKU) 31 January 1990

## Description

This invention relates to a fluorinated resin film which is to be laminated on a substrate such as a decorative marking film or flexible face or metal sheet, for the purposes of surface protection, stainproofing, application of weatherability, and so forth. More particularly, the present invention relates to a fluorinated resin film which can be laminated on a substrate at a low temperature (heat transfer temperature) of not higher than 110°C, and has excellent adhesivity and transparency.

Marking films, etc., have been used widely in recent years for interior and exterior decoration of buildings owing to their convenience, durability and low cost. Such materials are applied on characters, patterns, etc., printed on a substrate made of polyvinyl chloride, etc., and are used for display and decorative purposes. However, since they are used outdoors, the problems such as surface protection, stainproofing, weatherability, etc., have taken place.

A fluorinated resin-containing film is known as a surface protection material. Namely, Japanese Unexamined Patent Publication (KOKAI) No. 1-262133 describes a weather-resistant film including a surface layer which comprises 95 to 50 parts by weight of a fluorinated vinylidene resin and 5 to 50 parts by weight of methacrylate resin, and a back layer comprising 5 to 95 parts by weight of a fluorinated vinylidene resin, 95 to 5 parts by weight of methacrylate resin and 0.1 to 15 parts by weight of a ultraviolet (uv) absorber.

Japanese Unexamined Patent Publication (KOKAI) No. 2-30528 describes a film including a surface layer comprising 100 to 50 parts by weight of a vinylidene fluoride resin and 0 to 50 parts by weight of a methacrylate resin, an intermediate layer comprising 0 to 50 parts by weight of vinylidene fluoride resin and 100 to 50 parts by weight of a methacrylate resin, and an adhesive layer comprising a thermoplastic adhesive or a rubber-type adhesive. Tg of the adhesive layer used for this film is less than 35°C, and there remains the problem that the film is likely to become opaque due to high crystallinity.

Furthermore, Japanese Unexamined Patent Publication (KOKAI) No. 61-8349 (Japanese Patent Application No. 59-129782) describes a film including a surface layer comprising 100 to 50 parts by weight of a vinylidene fluoride resin and 0 to 50 parts by weight of a methacrylate resin and a back layer comprising 0 to 65 parts by weight of a vinylidene fluoride resin and 100 to 35 parts by weight of a methacrylate resin, either of the layers being provided with a light shading property.

Although all these conventional protective films have excellent surface protecting property, stainproofing property and weatherability, they require a high temperature (heat transfer temperature) when they are laminated on a substrate. More definitely, a temperature exceeding 110°C has been necessary. Accordingly, there have existed various problems in that devices for laminating the films are limited, and marking films, etc, undergo thermal deformation, and so forth. Furthermore, the films themselves involve the problems of low adhesivity to the substrate and low transparency.

Therefore, the application in situ of these film to a display surface for the protection thereof of the like, on which figures, characters, etc, have already been drawn or described, has been difficult.

The present invention has been completed in view of the problems described above, and is directed to provide a fluorinated resin film which can be laminated at a low heat transfer temperature of not higher than 110°C, and which has excellent adhesivity and transparency.

Therefore, the present invention provides a heat transferable fluorinated resin multi layer film having a surface layer and an adhesive layer characterized in that the surface layer comprises a resin composition containing at least 60 wt% of a vinylidene fluoride resin, and the adhesive layer comprises a transparent acrylic resin having a Tg of 35 to 90°C as its principal component.

The present invention also provides a fluorinated resin film laminate characterized in that the heat transferable fluorinated resin film described above is laminated on release paper or a release film having on its surface an ionomer resin as a releasing agent.

Furthermore, the present invention relates to a method of laminating a fluorinated resin film characterized in that the fluorinated resin film or the fluorinated resin film laminate described above is laminated on a marking film or a flexible face at a heat transfer temperature of not higher than 110°C.

### Surface Layer

The vinylidene fluoride resin used for the present invention is either a homopolymer of vinylidene fluoride or copolymers of vinylidene fluoride and a monomer copolymerizable with vinylidene fluoride such as ethylene tetrafluoride, vinyl fluoride, propylene hexafluoride, and so forth.

A methacrylate type resin is a preferred example as a resin that can be mixed with the vinylidene fluoride resin of the surface phase. The methacrylate resin has high compatibility with the vinylidene fluoride resin, has high mechanical strength, and has high transparency.

The amount of the vinylidene fluoride resin added of the surface layer is at least 60 wt%, and preferably at least 80 wt%. If the amount is less than 60 wt%, stainproofing and weatherability are insufficient, and if the amount exceeds 90 wt%, the resin can be used for heat-resistant applications.

The thickness of the surface layer preferably is below 30 µm and more preferably, 3 to 20 µm. If it exceeds 30 µm, transparency as the object of the present invention will be lost. The preferred thickness is limited to 3 to 20 µm because if the thickness is less than 3 µm, handling property is lowered and the production condition of the film becomes severer. If the thickness is below 20 µm, on the other hand, transparency can be further improved and the production cost becomes lower.

### Adhesive Layer

The resin of the adhesive layer used for the present invention is a resin composition comprising a transparent acrylic resin having Tg of 35 to 90°C as its principal component.

If Tg is less than 35°C, a plasticizer from the marking film, etc, will migrate to the film and the adhesivity will be reduced remarkably. If Tg exceeds 90°C, on the other hand, heat press below 110°C becomes impossible. Furthermore, problems such as interface peel with the passage of time, and the drop of the adhesivity would occur. By the way, Tg can be measured by a differential scanning calorimeter. (DSC).

In the present invention, the content of the acrylic resin having Tg in the range of 35 to 90°C is preferably at least 30 wt%. If the content is less than 30 wt%, the drop of the adhesivity due to the migration of the plasticizer from the marking film, etc, cannot be prevented effectively. When acrylic resins having other Tg ranges are used, they preferably are polymerized separately by known polymerization methods such as a solution polymerization method and they are then mixed with one another. This is to secure the Tg range described above.

Examples of the acrylic resins having Tg in the range of 35 to 90°C and also having transparency are as follows.

| | |
|---|---|
| ethyl methacrylate | (Tg = 65°C) |
| isopropyl methacrylate | (Tg = 81°C) |
| n-propyl methacrylate | (Tg = 35°C) |
| isobutyl methacrylate | (Tg = 53°C) |
| cyclohexyl methacrylate | (Tg = 66°C) |
| 2-hydroxyethyl methacrylate | (Tg = 55°C) |
| tert-butyl acrylate | (Tg = 41°C) |
| n-hexadecyl acrylate | (Tg = 35°C) |

Besides the acrylic resins described above, the copolymers between the methacrylic acid esters and the acrylic acid esters having Tg within the range described above can also be used.

A vinyl chloride - vinyl acetate copolymer can be added to the acrylic resin. However, the vinyl chloride - vinyl acetate copolymer involves the problem in that its adhesivity is high but its weatherability is low. For this reason, the mixing ratio of the acrylic resin and the vinyl chloride-vinyl acetate copolymer is preferably from 60/40 to 95/5 by weight. If the weight ratio of the vinyl chloride - vinyl acetate copolymer resin is less than 5 wt%, the effect of improvement in the adhesivity cannot be recognized and if it exceeds 60 wt%, on the other hand, weatherability and transparency become low.

In the present invention, the thickness of the adhesive layer is from 1 to 15 µm, preferably from 1 to 5 µm. If it exceeds 15 µm, transparency will drop and if it is less than 1 µm, on the other hand, a sufficient adhesivity cannot be obtained.

### Intermediate Layer

To improve the adhesivity between the surface layer and the adhesive layer in the present invention, an intermediate layer comprising a resin composition containing 0 to less than 60 wt% of a vinylidene fluoride resin and a methacrylate resin may be disposed. The reason why the upper limit of the vinylidene fluoride resin is limited to less than 60 wt% is because the improvement of the adhesivity becomes insufficient when the resin amount is greater than 60 wt%.

### Release Paper or Release Film

Release paper or release film is effective for improving the workability and for preventing the occurrence of creases of the product at the time of lamination of the adhesive or as a support at the time of heat transfer.

To accomplish this object, a weight of 30 to 150 g/m² is necessary when the support is paper or resin-impregnated paper, and a thickness of 25 to 100 µm is necessary when the support is a film.

Furthermore, a peel strength is preferably from 5 to 150 g/25 mm between the release paper or film and the fluorinated resin multi-layered film used in the present invention.

If the peeling strength is less than 5 g/25 mm, peel is likely to occur at the time of lamination of the adhesive, and if it exceeds 150 g/25 mm, on the other hand, release paper or the release film cannot be peeled off easily.

An EVA, an ionomer resin, a silicon resin, etc, can be used as the releasing agent of the release paper or film used for the present invention. However, preferred is an ionomer resin containing a Na complex, a Zn complex, etc, in the polymer because the peel strength can be easily controlled.

Definite examples of the ionomer resins include "Sarlin A" of E.I. DuPont, and "Himilan 1605, 1707, 1702" of Mitsui-DuPont Co.

### Production Method

The surface layer, the intermediate layer, the adhesive layer, mode release paper, etc, used for the present invention are as described above, and the product of the present invention can be produced by the use of such materials.

First of all, the materials for the surface layer and for the intermediate layer are extruded by a co-extruder and are molded into a film shape.

The surface layer or the intermediate layer is laminated by use of the adhesive or by heating to obtain a composite film.

On the other hand, a commercially available product can be used as such a fluorinated resin film. Definite examples of such films include a "DX film" (product of Denki Kagaku Kogyo), "KYNAR film" (product of Mitsubishi Petrochemical), "KFC film" (product of Kureha Kagaku Kogyo), and so forth.

A particular adhesive that can be used in the present invention can be polymerized from monomers by solution polymerization or emulsion polymerization, as well. It is also possible to mix commercially available adhesives for the present invention.

More definitely, it is possible to use the adhesive in the form of an adhesive solution prepared by dissolving the particular adhesive described above, having a number average molecular weight of 50,000 to 1,000,000 in a solvent such as toluene, xylene, MEK, etc, in a solid content of 10 to 30%, or to heat and soften the adhesive polymer to a temperature of not lower than 200°C.

The product of the present invention can be produced by coating such an adhesive solution or by laminating it onto the fluorinated resin film.

### Examples

Next, the present invention will be explained further definitely with reference to Examples thereof.

### Example 1

DX-14S (laminate film of Denka Kagaku Kogyo K.K. including a surface layer (6 µ-thick) comprising 80% by weight of a vinylidene fluoride resin and 20 wt% of an acrylic resin, and an intermediate layer (14 µ-thick) comprising 20% by weight of a vinylidene fluoride resin and 80% by weight of an acrylic resin) was laminated on a support.

Release paper of Kimberly-Clark Co. obtained by sequentially laminating a 40 µ-thick EVA layer containing 21% of a vinyl acetate resin and a 25 µ-thick ionomer layer on acryl-impregnated paper having a weight of 70 g/m² was used as the support. Lamination was carried out by the use of a heat-laminator at a heat drum temperature of 100°C. The laminate surfaces in this case were the surface of the surface layer of the vinylidene fluoride resin film and the surface of the ionomer of the support.

To form the adhesive layer, an acrylic resin solution having the following composition was prepared.

| | |
|---|---|
| Acryloid B 44 (Tg = 60°C) | 16 |
| Acryloid B 82 (Tg = 30°C) | 4 |
| Uvinul 400 UV absorber | 1 |
| toluene | 79 |

Acryloid was a product of Rohm & Haas Co. and Uvinul was a product of BASF Co.

Thereafter, the acrylic solution described above was coated on the intermediate layer of the vinylidene fluoride resin film by the use of a gravure coater, and dried to form a 3 µm-thick adhesive layer.

### Example 2

The acrylic resin in the acrylic resin solution in Example 1 was all replaced by an acrylic resin having Tg 35.

### Example 3

The acrylic resin in the acrylic resin solution in Practical Example 1 was all replaced by an acrylic resin having Tg of 81°C.

### Comparison Example 1

The acrylic resin in the acrylic resin solution in the Practical Example was all replaced by an acrylic resin having Tg of 30°C.

### Comparison Example 2

The acrylic resin in the acrylic resin solution in the Practical Example was all replaced by an acrylic resin having Tg of 95°C.

After the pressure was reduced to 670 mmHg, each of the films was heated to 107°C for 1 minute and was thermally transferred to the surface of a flexible face and to the surface of an ink-colored flexible face using vinyl chloride resin as a vehicle, by the use of a vacuum heat transfer apparatus. The support was removed after heat transfer was completed.

### Performance Test Method

### Adhesivity Test

The adhesivity test of each of the heat transferred films was carried out in accordance with "Tape Snap Test" of "Ordinary Paint Testing Method", JIS K 5400. As the aging condition prior to the adhesivity test, the following 7 conditions were tested: each sample was left standing at room temperature (21°C, 65% RH) for 24 hours (normal), heated by a hot air circulation oven at 65°C for 7 days, 30 days and 60 days, and kept in a programmed cycle thermostat* for seven cycles, 30 cycles and 60 cycles.
*one cycle = repetition of 30°C, 0 RH (12 hr) and 80°C, 50 RH (12 hr).

Table 1 tabulates the performance test results of Practical Examples 1, 2 and 3 and Comparison Examples 1, 2 and 3.

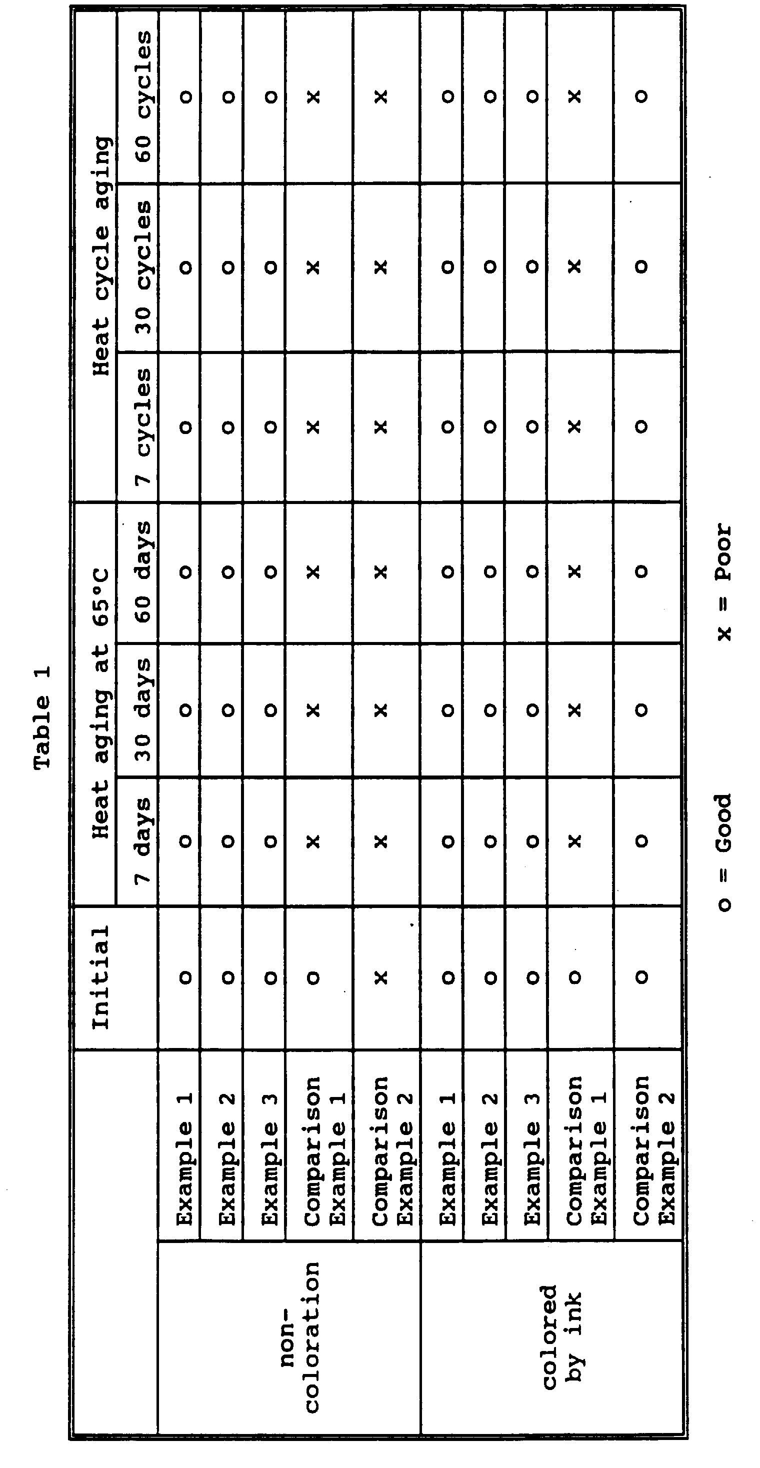

### Stain Resistance Test

In the films comprising a mixture of the vinylidene fluoride resin and the acrylic resin, the following stain materials were brought into direct contact with each of the films having the vinylidene fluoride contents of 50 wt%, 60 wt%, 80 wt% and 100 wt%, respectively, and each sample film was let standing at a room temperature for 12 hours. The appearance of each test film was checked after cleaning with cotton dipped into isopropyl alcohol.

Stain Materials: shoe polish, dry ink, ballpoint pen and cinnabar seal ink

The stain test result is shown in Table 2.

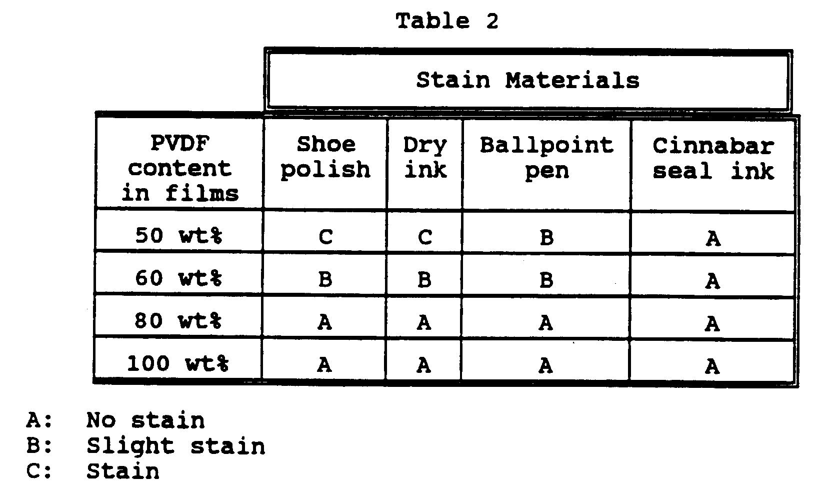

### Light Transmissivity Measurement Test

A 3 µm-thick adhesive layer which was the same as that of Example 1 was disposed on each of the fluorinated resin films comprising 80 wt% of the vinylidene fluoride resin and 20 wt% of the acrylic resin and having different thickness of 3, 10, 20, 30 and 50 µm, respectively, and the total light transmissivity was measured using a photometer.
It was known that a decorative member, etc, having good appearance could be obtained practically if the transmissivity was higher than 90%.

**TABLE 3**

| | | | | | |
|---|---|---|---|---|---|
| Thickness of fluorinated resin film (µm) | 3 | 10 | 20 | 30 | 50 |
| Light Transmissivity (%) | 99 | 97 | 94 | 98 | 58 |

### Effect of the Invention

The fluorinated resin film according to the present invention can be heat-transferred at a temperature of not lower than 110°C to the surface of the flexible face or the marking film. Therefore, the surface of the flexible face and the marking film can be protected by carrying out in situ heat transfer without using a large scale transferring apparatus.

The decorative material using the fluorinated resin film of the present invention can reproduce correctly the underlying colors and provides excellent appearance because the fluorinated resin film has excellent transparency.

## Claims

1. A heat-transferable vinylidene fluoride resin multilayer film, having a surface layer, an intermediate layer and an adhesive layer, characterized in that said surface layer comprises a resin composition containing at least 60 wt% of a vinylidene fluoride, and said intermediate layer comprises a resin composition containing less than 60% of a vinylidene fluoride and a methacrylate resin, and said adhesive layer comprises a resin composition containing a transparent acrylic resin having a glass transition point (Tg) of 35 to 90°C as its major component.

2. A heat transferable fluorinated resin film according to Claim 1, wherein said adhesive resin layer comprises a mixture of at least two kinds of acrylic resins containing at least 30 parts by weight of a transparent acrylic resin having Tg of 35 to 90°C.

3. A heat transferable fluorinated resin film according to Claim 1 or 2, wherein said adhesive layer contains a transparent acrylic resin having Tg of 35 to 90°C and a vinyl chloride - vinyl acetate copolymer resin, and a weight ratio of said acrylic resin to said vinyl chloride - vinyl acetate copolymer is from 60/40 to 95/5.

4. A heat transferable fluorinated resin film according to any of Claims 1 through 3, wherein the thickness of said surface layer is not greater than 30 µm, and the thickness of said adhesive layer is not greater than 15 µm.

5. A fluorinated resin film laminate characterized in that said heat transferable fluorinated resin film according to any of Claims 1 through 4 is laminated on release paper or a release film using an ionomer resin as a releasing agent.

6. A method of laminating a fluorinated resin film characterized in that said fluorinated resin film according to any of Claims 1 through 4 or said fluorinated resin film laminate according to Claim 5 is laminated on a marking film or a flexible face at a heat transfer temperature of not higher than 110°C.

## Patentansprüche

1. Wärmeübertragbarer Vinylidenfluoridharz-Mehrschichtfilm, der eine Oberflächenschicht, eine Zwischenschicht und eine Klebstoffschicht hat, dadurch gekennzeichnet, daß die Oberflächenschicht eine Harzzusammensetzung umfaßt, die wenigstens 60 Gew.-% eines Vinylidenfluorids enthält, und daß die Zwischenschicht eine Harzzusammensetzung umfaßt, die weniger als 60 Gew.-% eines Vinylidenfluorid- und eines Methacrylatharzes enthält, und daß die Klebstoffschicht eine Harzzusammensetzung umfaßt, die ein transparentes Acrylharz mit einem Glasübergangspunkt (Tg) von 35 bis 90°C als dessen Hauptkomponente enthält.

2. Wärmeübertragbarer fluorierter Harzfilm nach Anspruch 1, wobei die Klebstoffharzschicht eine Mischung aus wenigstens zwei Arten von Acrylharzen umfaßt, die wenigstens 30 Gewichtsteile eines transparenten Acrylharzes mit einer Tg von 35 bis 90°C enthalten.

3. Wärmeübertragbarer fluorierter Harzfilm nach Anspruch 1 oder 2, wobei die Klebstoffschicht ein transparentes Acrylharz mit einer Tg von 35 bis 90°C und ein Vinyllchlorid-Vinylacetatcopolymerharz enthält, und ein Gewichtsverhältnis des Acrylharzes zu dem Vinylchlorid - Vinylacetatcopolymer von 60/40 bis 95/5 ist.

4. Wärmeübertragbarer fluorierter Harzfilm nach einem der Ansprüche 1 bis 3, wobei die Dicke der Oberflächenschicht nicht größer als 30 µm ist, und die Dicke der Klebstoffschicht nicht größer als 15 µm ist.

5. Fluoriertes Harzfilmlaminat, dadurch gekennzeichnet, daß der wärmeübertragbare fluorierte Harzfilm nach einem der Ansprüche 1 bis 4 unter Verwendung eines Ionomerharzes als ein Trennmittel auf das Trennpapier oder eine Trennfolie laminiert wird.

6. Verfahren, einen fluorierten Harzfilm zu laminieren, dadurch gekennzeichnet, daß der fluorierte Harzfilm nach einem der Ansprüche 1 bis 4 oder das fluorierte Harzfilmlaminat nach Anspruch 5 auf eine Markierungsfolie oder eine flexible Fläche bei einer Wärmeübertragungstemperatur von nicht mehr als 110°C laminiert wird.

## Revendications

1. Pellicule à couches multiples en résine de fluorure de vinylidène qu'on peut transférer thermiquement ayant une couche superficielle, une couche intermédiaire et une couche adhésive, caractérisée en ce que ladite couche superficielle comprend une composition de résine contenant au moins 60% en poids d'un fluorure de vinylidène et ladite couche intermédiaire comprend une composition de résine contenant moins de 60% en poids d'un fluorure de vinylidène et d'une résine de méthacrylate et ladite couche adhésive comprend une composition de résine contenant une résine acrylique transparente ayant un point de transition vitreuse (Tg) de 35 à 90°C comme composant principal.

2. Pellicule en résine fluorée qu'on peut transférer thermiquement selon la revendication 1, dans laquelle ladite couche de résine adhésive comprend un mélange d'au moins deux types de résines acryliques contenant au moins 30 parties en poids d'une résine acrylique transparente ayant un Tg de 35 à 90°C.

3. Pellicule en résine fluorée qu'on peut transférer thermiquement selon la revendication 1 ou 2, dans laquelle ladite couche adhésive contient une résine acrylique transparente ayant un Tg de 35 à 90°C et une résine de copolymère chlorure de vinyle/acétate de vinyle et le rapport pondéral de ladite résine acrylique audit copolymère chlorure de vinyle/acétate de vinyle est de 60/40 à 95/5.

4. Pellicule en résine fluorée qu'on peut transférer thermiquement selon l'une quelconque des revendications 1 à 3, dans laquelle l'épaisseur de ladite couche superficielle ne dépasse pas 30 µm et l'épaisseur de ladite couche adhésive ne dépasse pas 15 µm.

5. Stratifié de pellicule en résine fluorée, caractérisé en ce que ladite pellicule en résine fluorée qu'on peut transférer thermiquement selon l'une quelconque des revendications 1 à 4 est stratifiée sur un papier de libération ou une pellicule de libération utilisant une résine ionomère à titre d'agent de libération.

6. Procédé de stratification d'une pellicule en résine fluorée, caractérisé en ce que ladite pellicule en résine fluorée selon l'une quelconque des revendications 1 à 4 ou ledit stratifié de pellicule en résine fluorée selon la revendication 5 est stratifié sur une pellicule de marquage ou une surface souple à une température de transfert thermique ne dépassant pas 110°C.
